# Europäisches Patentamt

## European Patent Office

## Office européen des brevets

(11) Veröffentlichungsnummer: **0 152 912**
**B1**

(12) **EUROPÄISCHE PATENTSCHRIFT**

(45) Veröffentlichungstag der Patentschrift:
**08.02.89**

(21) Anmeldenummer: **85101576.8**

(22) Anmeldetag: **13.02.85**

(51) Int. Cl.⁴: **C 10 J 3/66, C 10 B 53/00**

(54) Verfahren zur Erzeugung von brennbaren Gasen aus Abfallstoffen.

(30) Priorität: **22.02.84 DE 3406307**

(43) Veröffentlichungstag der Anmeldung:
**28.08.85 Patentblatt 85/35**

(45) Bekanntmachung des Hinweises auf die Patenterteilung:
**08.02.89 Patentblatt 89/6**

(84) Benannte Vertragsstaaten:
**AT BE CH DE GB LI NL SE**

(56) Entgegenhaltungen:
**EP-A- 0 055 440**
**WO-A-81/00112**
**DE-A- 2 432 504**
**DE-A- 2 732 418**
**FR-A- 2 408 645**
**US-A- 1 777 449**

(73) Patentinhaber: **Kraftwerk Union-Umwelttechnik GmbH,
Kriegsbergstrasse 32, D-7000 Stuttgart 1 (DE)**

(72) Erfinder: **Seidel, Horst, Finkenhofstrasse 29,
D-6000 Frankfurt (DE)**
Erfinder: **Engelke, Guido, Darmstädter Strasse 33A,
D-6082 Mörfelden (DE)**

(74) Vertreter: **Mehl, Ernst, Dipl.-Ing. et al, Postfach 22 13 17,
D-8000 München 22 (DE)**

ACTORUM AG

## Beschreibung

Die Erfindung betrifft ein Verfahren zur Erzeugung von brennbaren Gasen aus Abfallstoffen wie Hausmüll, Industriemüll, Altreifen, Kunststoffabfällen, Klärschlamm oder dergl., wobei die Abfallstoffe in einer ersten Stufe in einem Drehreaktor unter Luftabschluss erhitzt und bei Temperaturen zwischen 300 und 700 °C verschwelt werden, die erzeugten Schwelgase aus der ersten Stufe abgezogen werden, in einer zweiten Stufe in einem Gasumwandlungsreaktor unter Zufuhr von sauerstoffhaltigen Gasen auf Temperaturen von 800 bis 1200 °C teilverbrannt und dann durch eine glühende Schicht von stückigen Feststoffen geleitet werden, die gekrackten Gase aus der zweiten Stufe abgezogen werden, und der Schwelkoks enthaltende Schwelrückstand aus der ersten Stufe abgezogen wird.

Die Beseitigung von organischen und anorganischen Abfallstoffen, wie Hausmüll, Industriemüll, Altreifen, Kunststoffabfällen, Klärschlamm oder dgl., in einer Weise, welche die Umweltbelastung möglichst gering hält, wird zu einem immer grösseren und dringenderen Problem.

Ein Verfahrensweg besteht darin, dass durch eine Verschwelung der Abfallstoffe Schwelgase und ein Schwelrückstand erzeugt werden, die Schwelgase gekrackt werden und nach einer Reinigung ein brennbares Gas voliegt.

Aus der DE-A-2 927 240 ist ein solches Verfahren bekannt, bei dem die Abfallstoffe in einer indirekt beheizten Drehtrommel bei Temperaturen von 300 bis 600 °C unter Luftabschluss verschwelt werden. Der den gebildeten Schwelkoks enthaltende Schwelrückstand aus der Drehtrommel wird in einen schachtförmigen Gaswandler überführt. Die Schwelgase werden aus der Drehtrommel direkt in den freien, oberen Teil des Gaswandlers geleitet und dort mit vorgewärmter Luft vermischt und teilverbrannt. Danach werden sie im unteren Teil des Gaswandlers durch einen Teil der glühenden Schicht des Schwelrückstandes geleitet. Von unten werden in die glühende Schicht des Schwelrückstandes Luft und Dampf eingeleitet. Die Verbrennungsgase werden zusammen mit den gekrackten Schwelgasen aus einem mittleren Teil der glühenden Schicht des Schwelrückstandes abgezogen. Das Kracken der Schwelgase erfolgt bei Temperaturen von 850 bis 1200 °C. Anschliessend wird das Mischgas abgekühlt, gereinigt und als brennbares Gas einer Verwendung zugeführt. Die aus dem Schwelkoks entstehende Asche wird aus dem Gaswandler am Boden abgezogen.

Aus der DE-C-2 432 504 ist ein ähnliches Verfahren bekannt, bei dem jedoch der aus der Drehtrommel ausgetragene Schwelrückstand zunächst in Schwelkoks und andere feste Rückstände sortiert wird und nur der Schwelkoks in den Gaswandler chargiert wird. Gegebenenfalls kann zusätzlich Fremdkoks chargiert werden. Die Schwelgase werden nach einer Staubentfernung in den Gaswandler geleitet und mit der im unteren Teil der glühenden Schicht eingeleiteten Frischluft teilverbrannt. Das bei der gleichzeitigen Verbrennung von Schwelkoks und Schwelgas entstehende Mischgas wird unten aus der Schicht abgezogen. Die Asche wird ebenfalls unten ausgetragen.

Aus der DE-A-2 732 418 ist ein Verfahren bekannt, bei dem die Schwelgase direkt in einen Gaswandler geleitet werden, der ein Festbett aus inertem Material aus z.B. feuerfesten Steinen oder porösem Keramikmaterial enthält. Die festen Schwelrückstände werden einer Weiterverwertung, wie Erzeugung von Aktivkohle oder Verbrennung zu Heizzwecken, zugeführt.

Bei diesem Verfahren enthält das aus dem Gaswandler abgeleitete, gekrackte Gas beträchtliche Gehalte an verflüchtigten Schwermetallverbindungen, die mit dem festen Schwelrückstand bzw. durch den von den Schwelgasen mitgeführten Staub in den Gaswandler gelangen und dort bei den hohen Temperaturen verdampft oder verflüchtigt werden. Ausserdem wird ein optimaler Gasdurchgang der Feststoffschicht durch Staubablagerungen, Anbackungen und Verklumpungen verhindert.

Der Erfindung liegt die Aufgabe zugrunde, einen optimalen Gasdurchgang in der glühenden Schicht der stückigen Feststoffe in dem Gaswandler zu gewährleisten und den Gehalt an Schwermetallverbindungen im gekrackten Gas aus dem Gaswandler möglichst gering zu halten.

Die Lösung dieser Aufgabe erfolgt erfindungsgemäss dadurch, dass die aus der ersten Stufe abgezogenen Schwelgase in einer trockenen Gasreinigung weitgehend von mitgerissenen Feststoffen befreit und dann in der zweiten Stufe durch eine glühende Schicht aus Fremdkoks geleitet werden, aus der ständig ein Teil des Fremdkokses abgezogen, gereinigt und wieder eingeführt wird, und wobei der aus der ersten Stufe abgezogene Schwelrückstand durch Siebung von grobkörnigen Teilchen, die so einer Weiterverarbeitung zur Gewinnung des Metallgehaltes zugeführt werden können, befreit wird und zusammen mit den in der trockenen Gasreinigung abgeschiedenen Feststoffen aus dem Prozess entfernt werden.

Gröbere Abfallstoffe müssen im allgemeinen vor der Aufgabe in den Drehreaktor zerkleinert werden, zum Beispiel in einer Rotormühle oder Rotorschere. Dabei anfallender grober Schrott wird zweckmässigerweise entfernt und dadurch die Lebensdauer des Drehreaktors erhöht. Als Drehreaktor wird vorzugsweise ein Drehrohr verwendet. Die Beheizung kann mit Energie erfolgen, die im Prozess selbst anfällt, es kann aber auch Fremdenergie verwendet werden. Der Drehreaktor kann indirekt oder direkt beheizt werden. Die trockene Gasreinigung der aus der ersten Stufe abgezogenen Schwelgase kann mit Zyklonen oder Multiklonen erfolgen. Die Schicht aus stückigem Feststoff in der zweiten Stufe kann aus Fremdkoks, feuerfesten Steinen oder porösem Keramikmaterial bestehen. Die unterstöchiometrische Teilverbrennung der Schwelgase in der zweiten Stufe erfolgt im oberen freien Teil des Gaswandlers oberhalb der Schicht aus Feststoffen. Die sauerstoffhaltigen Gase werden zweckmässigerweise im vorgewärmten Zustand zugegeben. Im allgemeinen bestehen sie aus Luft. Es ist aber auch möglich, technischen Sauerstoff oder sauerstoffangereicherte Luft zu verwenden, wenn Sauerstoff unter günstigen Bedingungen zur Verfügung steht. Die Teilverbrennung des Schwelgases wird so gesteuert, dass der Wärmeinhalt der teilverbrannten Gase ausreicht, die Schicht der Feststoffe auf der gewünschten Temperatur zu halten. Da die Schwelgase nur teilverbrannt werden und kein freier Sauerstoff in die glühende Schicht geleitet wird, wird – wenn die glühende Schicht aus Koks besteht – kein Koks verbrannt. Der ständige Abzug eines Teiles der Feststoffe aus der Schicht kann kontinuierlich oder intermittierend erfolgen. Vorzugsweise erfolgt der Austrag durch Schwerkraftwirkung. Aus dem ausgetragenen Teil wird der mit den Schwelgasen eingebrachte Staub und evtl. Abrieb z.B. durch Siebung entfernt. Der gereinigte Feststoff wird wieder in die Schicht eingebracht, wobei evtl. Verluste ersetzt werden. Der aus der ersten Stufe ausgetragene feste Schwelrückstand, der den gebildeten Schwelkoks enthält, wird unter Luftabschluss abgekühlt und dann abtransportiert. Die Abkühlung kann in einfacher Weise durch Eingabe in ein Wasserbad erfolgen. Auch die in der trockenen Gasreinigung der Schwelgase anfallenden Feststoffe, die Schwelkoks in feinkörniger Form enthalten, müssen unter Luftabschluss abgekühlt werden. Da die Schwelung unter reduzierenden Bedingungen abläuft, wird der Metallgehalt von feinkörnigen Partikeln zu Metall reduziert, soweit die Bedingungen in der Schwelung dazu ausreichen. Diese feinkörnigen Metalle sowie die in dieser Form bereits eingebrachten Metalle lagern sich zum grössten Teil an den gebildeten Schwelkoks an. Da sowohl der im festen Schwelrückstand enthaltene Schwelkoks als auch der in der trockenen Gasreinigung abgeschiedene Schwelkoks aus dem Prozess entfernt werden, gelangen die angelagerten Metalle nicht in die bei wesentlich höheren Temperaturen betriebene zweite Stufe. Dadurch wird eine Verflüchtigung oder Verdampfung von schädlichen NE-Metallen oder deren Verbindungen in dieser Stufe vermieden und sie gelangen nicht in das aus dieser Stufe austretende brennbare Gas.

Das brennbare Gas kann in bekannter Weise gereinigt werden.

Eine vorzugsweise Ausgestaltung besteht darin, dass die Schicht des stückigen Feststoffes in der zweiten Stufe aus Fremdkoks gebildet wird. Koks ist ein billiger und ein sehr gut geeigneter Feststoff für die Krackung der Schwelgase. Der ausgetragene Teil wird unter Luftabschluss gekühlt, z.B. durch Austrag über ein Wasserbad, und dann gereinigt.

Eine vorzugsweise Ausgestaltung besteht darin, dass aus dem Schwelrückstand grobkörnige Teilchen abgetrennt und einer Weiterverarbeitung zur Gewinnung des Metallgehaltes zugeführt werden. Die Abtrennung erfolgt nach der Kühlung des Schwelrückstandes. Die grobkörnigen Teilchen bestehen zum grossen Teil aus Eisen und NE-Metallen. Dadurch können diese einer Wiedergewinnung zugeführt werden.

Eine vorzugsweise Ausgestaltung besteht darin, dass die Abtrennung der grobkörnigen Teilchen durch Siebung bei einem Siebschnitt im Bereich von 10 bis 30 mm erfolgt. Dadurch wird eine Grobfraktion mit hohem Metallgehalt erhalten.

Eine vorzugsweise Ausgestaltung besteht darin, dass die Abtrennung der grobkörnigen Teilchen durch Siebung bei einem Siebschnitt im Bereich von 18 bis 25 mm erfolgt. Dadurch wird der Trenneffekt in Schwelkoks und die metallhaltige Fraktion noch verbessert.

Eine vorzugsweise Ausgestaltung besteht darin, dass der in der ersten Stufe bei der Schwelung anfallende Schwelkoks deponiert wird. Es wurde festgestellt, dass an dem Schwelkoks angelagerte Metalle durch Wasser und auch durch schwachsaures Wasser praktisch nicht abgelöst werden. Durch den bewussten Verzicht auf eine Weiterverwendung des Schwelkokses und seine Deponie werden diese Metalle in umweltfreundlicher Weise abgelagert. Dies gilt auch für den in der trockenen Gasreinigung abgeschiedenen Schwelkoks.

Eine vorzugsweise Ausgestaltung besteht darin, dass der Schwelkoks vor der Deponierung stückig gemacht wird. Dadurch wird zusätzlich der für die Deponie erforderliche Raum verringert.

Die Vorteile der Erfindung bestehen darin, dass der Gasdurchgang in der glühenden Schicht der stückigen Feststoffe in der zweiten Stufe ständig auf optimalen Werten gehalten werden kann, dadurch optimale Strömungsverhältnisse und optimale Bedingungen aufrechtgehalten werden können, und der Gehalt der gekrackten Gase an schädlichen NE-Metallen bzw. deren Verbindungen gering gehalten werden kann.

**Patentansprüche**

1. Verfahren zur Erzeugung von brennbaren Gasen aus Abfallstoffen wie Hausmüll, Industriemüll, Altreifen, Kunststoffabfällen, Klärschlamm oder dergleichen, wobei die Abfallstoffe in einer ersten Stufe in einem Drehreaktor unter Luftabschluss erhitzt und bei Temperaturen zwischen 300 und 700 °C verschwelt werden, die erzeugten Schwelgase aus der ersten Stufe abgezogen werden, in einer zweiten Stufe in einem Gasumwandlungsreaktor unter Zufuhr von sauerstoffhaltigen Gasen auf Temperaturen von 800 bis 1200 °C teilverbrannt und dann durch eine glühende Schicht von stückigen Feststoffen geleitet werden, die gekrackten Gase aus der zweiten Stufe abgezogen werden, und der Schwelkoks enthaltende Schwelrückstand aus der ersten Stufe abgezogen wird, dadurch gekennzeichnet, dass die aus der ersten Stufe abgezogenen Schwelgase in einer trockenen Gasreinigung weitgehend von mitgerissenen Feststoffen befreit und dann in der zweiten Stufe durch eine glühende Schicht aus Fremdkoks geleitet werden, aus der ständig ein Teil des Fremdkokses abgezogen, gereinigt und wieder eingeführt wird, und wobei der aus der ersten Stufe abgezogene Schwelrückstand durch Siebung von grobkörnigen Teilchen, die so einer Weiterverarbeitung zur Gewinnung des Metallgehaltes zugeführt werden können, befreit und zusammen mit den in der trockenen Gasreinigung abgeschiedenen Feststoffe aus dem Prozess entfernt wird.

2. Verfahren nach Anspruch 1, dadurch gekennzeichnet, dass die Abtrennung der grobkörnigen Teilchen durch Siebung bei einem Siebschnitt im Bereich von 10 bis 30 mm erfolgt.

3. Verfahren nach Anspruch 1, dadurch gekennzeichnet, dass die Abtrennung der grobkörnigen Teilchen durch Siebung bei einem Siebschnitt im Bereich von 18 bis 25 mm erfolgt.

4. Verfahren nach einem der Ansprüche 1 bis 3, dadurch gekennzeichnet, dass der in der ersten Stufe bei der Schwelung anfallende Schwelkoks deponiert wird.

5. Verfahren nach Anspruch 4, dadurch gekennzeichnet, dass der Schwelkoks vor der Deponierung stückig gemacht wird.

### Claims

1. Process for producing combustible gases from waste products such as household refuse, industrial refuse, old tyres, synthetic waste, purified sludge or similar, whereby the waste products are heated in a first stage in a rotating reactor with exclusion of air and carbonized at temperatures of between 300 and 700 °C, the low temperature carbonization gases produced are removed from the first stage and partially combusted at temperatures of 800 to 1200 °C in a second stage in a gas conversion reactor with conduction of oxygen-containing gases, and then are led through an incandescent layer of lumps of solid materials, the cracked gases are removed from the second stage, and the low temperature carbonization residue containing low temperature carbonization coke is removed from the first stage, characterised in that the low temperature carbonization gases removed from the first stage are substantially freed of entrained solid materials in a dry gas cleaning process and are then led through an incandescent layer of foreign coke in the second stage, one part of the foreign coke being constantly removed, cleaned and reintroduced, and whereby the low temperature carbonization residue removed from the first stage is freed by sieving of coarse-grained particles, which are conveyed for further processing in order to obtain the metal content, and is removed from the process together with the solid materials separated in the dry gas cleaning process.

2. Process according to claim 1, characterised in that the separation of the coarse-grained particles occurs by sieving with a sieve size in the range of 10 to 30 mm.

3. Process according to claim 1, characterised in that the separation of the coarse-grained particles occurs by sieving with a sieve size in the range of 18 to 25 mm.

4. Process according to one of claims 1 to 3, characterised in that low temperature carbonization coke produced in the first stage in the low temperature carbonization is deposited.

5. Process according to claim 4, characterised in that the low temperature carbonization coke is agglomerated before deposition.

### Revendications

1. Procédé de production de gaz combustibles à partir de déchets, comme des ordures ménagères, des déchets industriels, des pneumatiques usés, des chutes de matières plastiques, des boues de curage ou des déchets analogues, qui consiste à chauffer les déchets dans un premier stade à l'abri de l'air dans un réacteur tournant, et à les carboniser à des températures comprises entre 300 et 700 °C, à soutirer du premier stade les gaz de carbonisation à basse température qui ont été produits, à les brûler partiellement à des températures de 800 à 1200 °C dans un second stade dans un réacteur de transformation des gaz avec apport de gaz contenant de l'oxygène, et ensuite à les envoyer à travers une couche incandescente de matières solides en morceaux, à soutirer les gaz craqués du second stade et à soutirer du premier stade le résidu de carbonisation à basse température contenant du coke de carbonisation à basse température, caractérisé en ce qu'il consiste à débarrasser, dans une grande mesure, des matières solides entraînées dans une installation d'épuration à sec des gaz, les gaz de carbonisation à basse température, soutirés du premier stade, et à les faire passer ensuite dans le second stade à travers une couche incandescente de coke extérieure, dont une partie du coke extérieur est soutirée, épurée et réintroduite constamment, le résidu de carbonisation à basse température, soutiré du premier stade, étant débarrassé par tamisage des particules grossières qui peuvent ainsi être envoyées à un retraitement, en vue de récupérer la teneur en métal, et étant éliminées du processus en même temps que les matières solides séparées dans l'installation d'épuration à sec des gaz.

2. Procédé suivant la revendication 1, caractérisé en ce qu'il consiste à effectuer la séparation des particules grossières par tamisage, avec une coupure de tamisage de l'ordre de 10 à 30 mm.

3. Procédé suivant la revendication 1, caractérisé en ce qu'il consiste à effectuer la séparation des particules grossières par tamisage avec une coupure de tamisage de l'ordre de 18 à 25 mm.

4. Procédé suivant l'une des revendications 1 à 3, caractérisé en ce qu'il consiste à mettre à la décharge le coke de carbonisation à basse température se produisant dans le premier stade, lors de la carbonisation à basse température.

5. Procédé suivant la revendication 4, caractérisé en ce qu'il consiste à morceler le coke de carbonisation à basse température avant la mise à la décharge.